# EUROPÄISCHE PATENTSCHRIFT

(11) **EP 3 720 725 B1**
(45) Veröffentlichungstag und Bekanntmachung des Hinweises auf die Patenterteilung: **09.11.2022**
(21) Anmeldenummer: 18814798.7
(22) Anmeldetag: 22.11.2018
(51) Int. Cl.: B60G 15/06, F16F 9/58, B60G 17/019, B60G 11/24, F16F 1/374, F16F 3/093

(54) **ZUSATZFEDER FÜR EINEN STOSSDÄMPFER EINES KRAFTFAHRZEUGS UND DÄMPFERLAGER FÜR EINEN STOSSDÄMPFER EINES KRAFTFAHRZEUGS**
ADDITIONAL SPRING FOR A SHOCK ABSORBER OF A MOTOR VEHICLE AND DAMPER BEARING FOR A SHOCK ABSORBER OF A MOTOR VEHICLE
RESSORT SUPPLÉMENTAIRE POUR UN AMORTISSEUR DE CHOCS D'UN VÉHICULE AUTOMOBILE ET PALIER D'AMORTISSEUR POUR UN AMORTISSEUR DE CHOCS D'UN VÉHICULE AUTOMOBILE

(30) Priorität: 06.12.2017 DE 102017221975
(43) Veröffentlichungstag der Anmeldung: 14.10.2020
(73) Patentinhaber: Audi AG, 85045 Ingolstadt (DE)
(72) Erfinder: ROTH, Andreas, 85110 Kipfenberg/Böhming (DE)
(86) Internationale Anmeldenummer: PCT/EP2018/082294
(87) Internationale Veröffentlichungsnummer: WO 2019/110320

(56) Entgegenhaltungen:
- DE-A1- 10 026 970
- DE-A1-102012 018 883
- KR-A- 20020 084 912
- US-A- 5 410 483
- US-A1- 2006 043 659
- US-A1- 2015 231 941

## Beschreibung

Die Erfindung betrifft eine Zusatzfeder für einen Stoßdämpfer eines Kraftfahrzeugs gemäß der im Oberbegriff des Patentanspruches 1 angegebenen Art sowie ein Dämpferlager für einen Stoßdämpfer eines Kraftfahrzeugs gemäß der im Oberbegriff des Patentanspruches 8 angegebenen Art.

Derartige Zusatzfedern sind aus dem Stand der Technik hinreichend bekannt und werden dazu verwendet, die Gesamtfederungseigenschaften des Fahrzeuges zu definieren und einen gedämpften Endanschlag für eine Radaufhängung auszubilden. Dazu wird die Zusatzfeder auf einer Kolbenstange eines Stoßdämpfers angeordnet, wobei die Zusatzfeder im Bereich eines Dämpferlagers gehalten ist. Federt das Kraftfahrzeug sehr stark ein, so wird die Zusatzfeder zwischen der Dämpferkappe auf dem Dämpferrohr des Stoßdämpfers und dem Dämpferlager komprimiert. Es ist weiterhin bekannt einen progressiven Kennlinienverlauf für die Zusatzfeder vorzusehen, um ein weiches Einfedern und eine progressive Verhärtung der Zusatzfeder bei weiter steigender Kompression zu gewährleisten.

Eine entsprechende Zusatzfeder und Dämpferlager sind in der DE 10 2012 020 569 A1 offenbart.

Ein bekanntes Problem von Zusatzfedern ist, dass diese im Bereich der Anbindung an das Dämpferlager einem verstärkten Abrieb und damit Verschleiß unterliegen, was auf die - aufgrund der bei heutigen Kraftfahrzeugen gängige schräg gestellte Anordnung der Stoßdämpfer - Schrägeinfederung, d. h. die nicht-parallele Einfederung der Kolbenstange des Stoßdämpfers zur Kraftfahrzeugkarosserie, zurückzuführen ist.

Eine gattungsgemäße, sämtliche Merkmale des Oberbegriffs des Patentanspruchs 1 aufweisende Zusatzfeder ist in der DE 10 2012 018883 A1 offenbart.

Der Erfindung liegt die Aufgabe zu Grunde, eine Zusatzfeder gemäß der im Oberbegriff des Patentanspruches 1 angegebenen Art derart weiterzubilden, dass eine längere Lebensdauer der Zusatzfeder gewährleistet ist.

Diese Aufgabe wird durch die kennzeichnenden Merkmale des Patentanspruches 1 in Verbindung mit seinen Oberbegriffsmerkmalen gelöst.

Die Unteransprüche 2 bis 7 stellen vorteilhafte Weiterbildungen der Erfindung vor.

In bekannter Art und Weise umfasst die Zusatzfeder einen ersten Federkörper, der eine zentrale Bohrung für die Durchführung einer Kolbenstange des Stoßdämpfers aufweist.

Dabei ist der erste Federkörper an einer Stirnseite sphärisch ausgebildet. Diese Ausgestaltung hat den Effekt, dass nach bestimmungsgemäßer Montage der Zusatzfeder auf die Kolbenstange des Stoßdämpfers (=> bestimmungsgemäße Montage heißt, dass nach Montage die sphärische Stirnseite des Federkörpers zum karosserieseitigen Dämpferlager ausgerichtet ist), aufgrund der sphärischen Stirnseite des ersten Federkörpers nunmehr zwischen dem Dämpferlager und dem Federkörper eine "gelenkige" Lagerung ermöglicht ist, durch die die Nachteile der Schrägeinfederung kompensiert werden. Hierdurch ist ein versatzfreies Einfedern sichergestellt, mit der Konsequenz, dass der nachteilige Abrieb am Federkörper nicht mehr bzw. nur noch im geringeren Maße auftritt, so dass ein verschleißfreierer Betrieb und damit eine längere Lebensdauer des ersten Federkörpers und damit der Zusatzfeder gewährleistet ist.

Die Zusatzfeder umfasst ferner einen zweiten Federkörper, der eine in Bezug zum ersten Federkörper andere, vorteilhaft geringere Federsteifigkeit aufweist und der mit einer zentralen Bohrung für die Durchführung einer Kolbenstange des Stoßdämpfers versehen ist, wobei der erste Federkörper gegenüberliegend zur sphärischen Stirnseite angrenzend zum ersten Federkörper und damit in Reihe zum ersten Federkörper angeordnet ist.

Hierdurch ist eine verbesserte Feinabstimmung des gewünschten progressiven Kennlinienverlaufs der Federkraft der Zusatzfeder ermöglicht. So ist durch eine entsprechende Auswahl der Federsteifigkeiten der beiden Federkörper, nämlich harte Federsteifigkeit für den ersten Federkörper und im Vergleich dazu sehr weiche Federrate für den zweiten Federkörper, eine sehr weiche Anfederrate bei unbeladenem Fahrzeug und Komfortanfedern mit leichter Progression, ermöglicht. Zudem weist eine derart ausgebildete Zusatzfeder eine längere Lebensdauer auf. Dies ist darauf zurückzuführen, dass in einem Verschleißfall in der Regel nur der zweite Federkörper betroffen ist, da dieser aufgrund seiner geringeren Federsteifigkeit verschleißanfälliger ist, und somit nur dieser und nicht die gesamte Zusatzfeder auszutauschen ist. Aufgrund des modularen Aufbaus der Zusatzfeder ist zudem ein für unterschiedliche Fahrzeuge einsetzbares Baukastensystem zur Verfügung gestellt, was eine Reduzierung der Variantenvielfalt der Zusatzfedern und damit eine Kostenreduktion zur Folge hat.

Die Zusatzfeder umfasst ferner einen zwischen dem ersten und dem zweiten Federkörper angeordneten Anschlagpuffer, der entsprechend zu dem ersten und zweiten Federkörper eine zentrale Bohrung für die Durchführung der Kolbenstange des Stoßdämpfers aufweist und der in Bezug zu den beiden Federkörpern eine wesentlich höhere Federsteifigkeit aufweist.

Aufgrund des eine wesentlich höhere Federsteifigkeit aufweisenden Anschlagpuffers ist eine sehr starke Progression der Zusatzfeder und damit eine Blockbegrenzung z. B. bei einer zu schnellen Bordsteinüberfahrt, gewährleistet.

Erfindungsgemäß ist nunmehr vorgesehen, dass der zweite Federkörper an seiner dem ersten Federkörper abgewandten Stirnseite ebenfalls sphärisch ausgebildet ist.

Vorteilhaft an erfindungsgemäßen Ausgestaltung ist, dass aufgrund der sphärischen Ausbildung der Stirnseite des zweiten Federkörpers eine verbesserte Winkelanpassung und damit ein versatzfreies Einfedern ermöglicht ist.

Vorzugsweise ist dabei die sphärisch ausgebildete Stirnseite des ersten Federkörpers und/oder des zweiten Federkörpers in Form eines Kugelkopfes ausgebildet.

Vorzugsweise ist dabei der Anschlagpuffer in einem im ersten und/oder zweiten Federkörper ausgebildeten Hohlraum angeordnet.

Eine weitere besonders vorteilhafte Ausführungsform der Erfindung sieht vor, dass im Anschlagpuffer ein piezoelektrischer Drucksensor integriert ist. Vorteilhaft an dieser Ausführungsform ist, dass mittels des Sensors ein Signalinput für ein Steuergerät zur Fahrwerkssteuerung zur Verfügung gestellt ist.

Vorzugsweise sind der erste und zweite Federkörper aus einem elastomeren Material, insbesondere aus Polyurethan und der Anschlagpuffer aus Polyamid ausgebildet.

Der Erfindung liegt des Weiteren die Aufgabe zu Grunde ein Dämpferlager für einen Stoßdämpfer eines Kraftfahrzeugs gemäß der im Oberbegriff des Patentanspruches 8 angegebenen Art derart weiterzubilden, dass sich das Dämpferlager unterstützend auf die angestrebte längere Lebensdauer einer nach den Patentansprüchen 1 bis 7 ausgebildeten Zusatzfeder auswirkt.

Diese Aufgabe wird durch die kennzeichnenden Merkmale des Patentanspruches 8 in Verbindung mit seinen Oberbegriffsmerkmalen gelöst.

Die Unteransprüche 9 bis 11 bilden eine vorteilhafte Weiterbildung des erfindungsgemäßen Dämpferlagers.

In bekannter Art und Weise weist das Dämpferlager für einen Stoßdämpfer eines Kraftfahrzeugs einen Flanschbereich zur Befestigung des Lagers an der Fahrzeugkarosserie sowie einen zylinderförmigen, als Hohlkörper ausgebildeten Aufnahmeraum auf, in dem im montierten Zustand der erste Federkörper der Zusatzfeder bereichsweise gehalten ist.

Erfindungsgemäß weist nunmehr der Aufnahmeraum eine korrespondierend zur Stirnseite des ersten Federelements ausgebildete, sphärisch geformte Bodenfläche auf. Die erfindungsgemäße Ausgestaltung hat den positiven Effekt, dass nunmehr aufgrund der gegenüber liegenden sphärischen Oberflächen eine optimale Winkelanpassung zwischen erstem Federelement und Dämpferlager ermöglicht ist, und somit der schädliche Effekt der Schrägeinfederung nochmals deutlich reduziert wird.

Vorzugsweise ist im Flanschbereich ein elastomeres Lagerungselement zur Verschraubung der Kolbenstange des Stoßdämpfers angeordnet.

Eine weitere vorteilhafte Ausführungsform sieht vor, dass das Lagerungselement einen piezoelektrischen Drucksensor umfasst, der entsprechende Eingangssignale für ein Steuergerät zur Fahrwerkssteuerung liefert. Durch die Anordnung des piezoelektrischen Drucksensors im Lagerungselement und damit im Dämpferlager ist in vorteilhafter Weise eine vereinfachte Verlegung der elektrischen Leitungen zum karosserieseitig angeordneten Steuergerät zur Fahrwerkssteuerung ermöglicht.

Vorzugsweise ist dabei die Bodenfläche des Aufnahmeraums in Form einer Kugelpfanne ausgebildet.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:
- Fig. 1: eine schematische Schnittdarstellung der erfindungsgemäßen Zusatzfeder;
- Fig. 2: eine schematische Schnittdarstellung des erfindungsgemäßen Dämpferlagers und
- Fig. 3: die Zusatzfeder aus Fig. 1 und das Dämpferlager aus Fig. 2 im montierten Zustand in einer schematischen Schnittdarstellung.

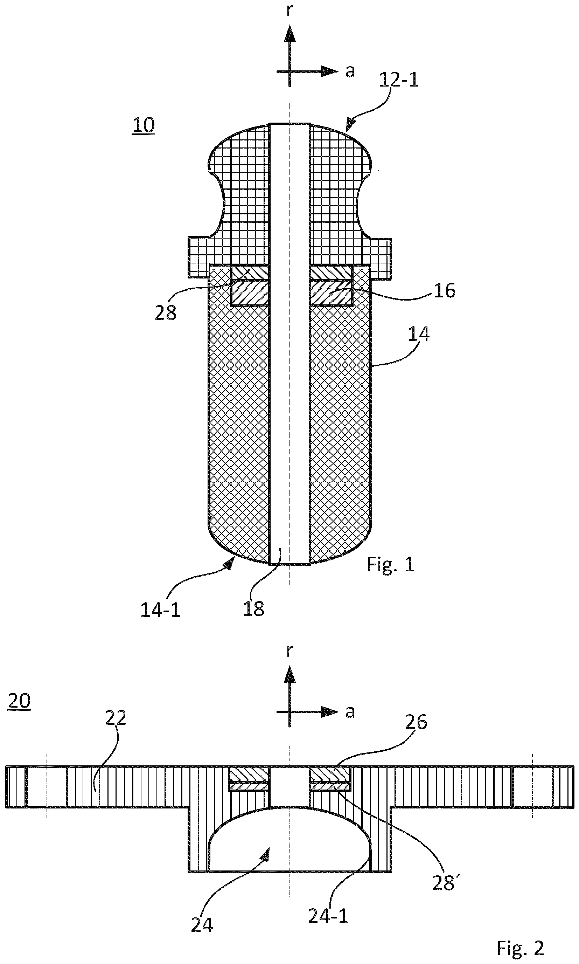

Fig. 1 zeigt eine insgesamt mit der Bezugsziffer 10 bezeichnete Zusatzfeder. Die Zusatzfeder 10 umfasst einen ersten Federkörper 12, einen zweiten Federkörper 14 und einen Anschlagpuffer 16.

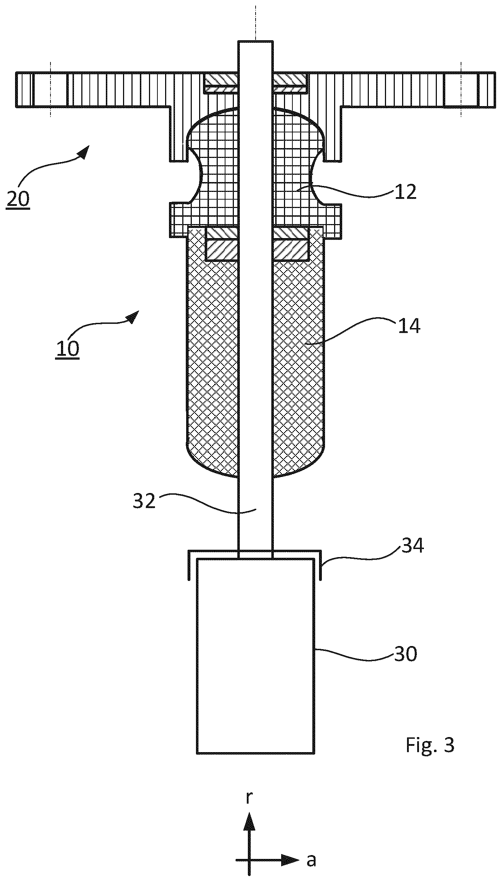

Dabei sind, wie Fig. 1 zeigt, die beiden Federkörper 12, 14 in axialer Richtung a betrachtet in Reihe angeordnet und der erste Federkörper 12 ist an seiner dem zweiten Federkörper 14 abgewandten Stirnseite 12-1 sphärisch ausgebildet, d. h. die Oberfläche weist eine halbkugelförmige Ausgestaltung auf. Entsprechend ist auch der zweite Federkörper 14 an seiner dem ersten Federkörper 12 abgewandten Stirnseite 14-1 sphärisch, vorliegend wieder halbkugelförmig, ausgebildet, über die sich der zweite Federkörper 14 beim Einfedern an der Stoßdämpferkappe 34 abstützt, vgl. Fig. 3.

Wie Fig. 1 weiter zu entnehmen ist, ist der Anschlagpuffer 16 in axialer Richtung a betrachtet zwischen dem ersten und zweiten Federkörper 12, 14 angeordnet, vorliegend in einem im zweiten Federkörper 14 ausgebildeten Hohlraum. Der Anschlagpuffer 16 kann optional mit einem piezoelektrischen Drucksensor 28 versehen sein, der entsprechende Eingangssignale für eine Fahrwerkssteuerung liefert.

Zudem sind die Federkörper 12, 14 und der Anschlagpuffer 16 jeweils mit einer, fluchtend zueinander angeordneten, zentralen Bohrung 18 versehen.

Weiterhin weisen die Federkörper 12, 14 sowie der Anschlagpuffer 16 unterschiedliche Federsteifigkeiten auf. Die aus einem elostomeren Material, wie z. B. Polyurethan, ausgebildeten Federkörper 12, 14 sind so ausgelegt, dass der erste Federkörper 12 eine im Vergleich zum zweiten Federkörper 14 höhere Federsteifigkeit aufweist. Und der aus einem Kunststoffmaterial, vorzugsweise Polyamid ausgebildete Anschlagpuffer 16 weist eine im Vergleich zum ersten Federelement 12 nochmals wesentlich höhere Federsteifigkeit auf.

Fig. 2 zeigt in einer schematischen Darstellung ein insgesamt mit der Bezugsziffer 20 bezeichnetes Dämpferlager. Das Dämpferlager 20 umfasst einen Flanschbereich 22 zur Befestigung an einer Fahrzeugkarosserie und einen zylinderförmigen, als Hohlkörper ausgebildeten Aufnahmeraum 24 zur teilweisen Aufnahme des ersten Federkörpers 12 der Zusatzfeder 10. Zudem umfasst das Dämpferlager 20 im Flanschbereich 22 ein elastomeres Lagerelement 26 zur Verschraubung der Kolbenstange 32 des Stoßdämpfers 30. Optional kann das Dämpferlager 20 mit einem piezoelektrischen Drucksensor 28'versehen sein, der entsprechende Eingangssignale an eine Fahrwerksteuerung liefert. Die Anordnung des piezoelektrischen Drucksensors 28' im Dämpferlager 20 erweist sich als besonders vorteilhaft, da hierdurch eine vereinfachte Verlegung der elektrischen Leitungen zur Fahrwerkssteuerung ermöglicht ist.

Dabei ist, wie Fig. 2 zeigt - die Bodenfläche 24-1 des Aufnahmeraums 24 korrespondierend zur sphärisch ausgebildeten Stirnfläche 12-1 des ersten Federkörpers 12 ausgebildet. D. h. die Bodenfläche 24-1 weist eine in Bezug auf die konvexe Formgebung der Stirnfläche 12-1 korrespondierend konkav ausgebildete Gegenkontur auf.

Fig. 3 zeigt in einer schematischen Darstellung die Zusatzfeder 10 und das Dämpferlager 20 im montierten Zustand auf einer Kolbenstange 32 eines Stoßdämpfers 30. Aufgrund der erfindungsgemäßen Ausgestaltung der Kontaktflächen 12-1 des ersten Federkörpers 12 und der Bodenfläche 24-1 des Dämpferlagers 24 liegt zwischen Zusatzfeder 10 und Dämpferlager eine Art gelenkige Lagerung vor, die beim Schrägeinfedern eine Winkelanpassung bewirkt und damit ein versatzfreies Einfedern ermöglicht.

## Patentansprüche

1. Zusatzfeder (10) für einen Stoßdämpfer eines Kraftfahrzeugs, umfassend einen ersten Federkörper (12) und einen zweiten Federkörper (14) mit einer in Bezug zum ersten Federkörper (12) unterschiedlichen Federsteifigkeit, wobei die Federkörper (12, 14) jeweils eine zentrale Bohrung (18) für die Durchführung einer Kolbenstange (32) des Stoßdämpfers (30) aufweisen, wobei zwischen dem ersten und zweiten Federkörper (12, 14) ein Anschlagpuffer (16) angeordnet ist, der eine in Bezug zu den beiden Federkörpern (12, 16) höhere Federsteifigkeit aufweist und der eine zentrale Bohrung (18) für die Durchführung einer Kolbenstange (32) des Stoßdämpfers (30) aufweist,
wobei der zweite Federkörper (14) an seiner dem ersten Federkörper (12) abgewandten Stirnseite (14-1) sphärisch ausgebildet ist,
**dadurch gekennzeichnet, dass** der erste Federkörper (12) an einer Stirnseite (12-1) sphärisch ausgebildet ist, und wobei der zweite Federkörper (14) gegenüberliegend zur sphärischen Stirnseite (12-1), angrenzend zum ersten Federkörper (12) angeordnet ist.

2. Zusatzfeder (10) nach Anspruch 1,
**dadurch gekennzeichnet, dass**
die sphärische ausgebildete Stirnseite (12-1, 14-1) in Form eines Kugelkopfes ausgebildet ist.

3. Zusatzfeder (10) nach Anspruch 1,
**dadurch gekennzeichnet, dass**
der Anschlagpuffer (16) in einem im ersten und/oder zweiten Federkörper (12, 14) ausgebildeten Hohlraum angeordnet ist.

4. Zusatzfeder (10) nach einem der Ansprüche 1,
**dadurch gekennzeichnet, dass**
im Anschlagpuffer (16) ein piezoelektrischer Drucksensor (28) integriert ist.

5. Zusatzfeder (10) nach einem der vorgenannten Ansprüche,
**dadurch gekennzeichnet, dass**
der Anschlagpuffer (16) aus Polyamid ausgebildet ist.

6. Zusatzfeder nach einem der vorgenannten Ansprüche,
**dadurch gekennzeichnet, dass**
der erste und/oder zweite Federkörper (12, 14) aus einem elastomeren Material ausgebildet sind.

7. Zusatzfeder nach Anspruch 6,
**dadurch gekennzeichnet, dass**
der erste und/oder zweite Federkörper (12, 14) aus Polyurethan ausgebildet sind.

8. Dämpferlager (20) für einen Stoßdämpfers eines Kraftfahrzeugs, mit einer Zusatzfeder (10) gemäß einem der Ansprüche 1 bis 7, umfassend einen Flanschbereich (22) zur Befestigung an einer Fahrzeugkarosserie sowie einen zylinderförmigen Aufnahmeraum (24), in dem im montierten Zustand der erste Federkörper (12) der Zusatzfeder (10) bereichsweise gehalten ist,
**dadurch gekennzeichnet, dass**
der Aufnahmeraum (24) eine korrespondierend zur Stirnseite (12-1) des ersten Federkörpers (12) ausgebildete, sphärisch geformte Bodenfläche (24-1) aufweist.

9. Dämpferlager (20) nach Anspruch 8,
**dadurch gekennzeichnet, dass**
im Flanschbereich (22) ein elastomeres Lagerungselement (26) angeordnet ist.

10. Dämpferlager (20) nach Anspruch 9,
**dadurch gekennzeichnet, dass**
das elastomere Lagerungselement (26) einen piezoelektrischen Drucksensor (28') umfasst.

11. Dämpferlager (20) nach einem der Ansprüche 8 bis 10,
**dadurch gekennzeichnet, dass**
die Bodenfläche (24-1) des Aufnahmeraums (24) in Form einer Kugelpfanne ausgebildet ist.

## Claims

1. Additional spring (10) for a shock absorber of a motor vehicle, comprising a first spring body (12) and a second spring body (14) with a different spring stiffness in relation to the first spring body (12), wherein the spring bodies (12, 14) each have a central hole (18) for a piston rod (32) of the shock absorber (30) to be led through, wherein a bump stop (16) is arranged between the first and second spring bodies (12, 14) which has a higher spring stiffness in relation to the two spring bodies (12, 16) and which has a central hole (18) for a piston rod (32) of the shock absorber (30) to be led through,
wherein the second spring body (14) is formed spherically on its end face (14-1) facing away from the first spring body (12),
**characterised in that** the first spring body (12) is formed spherically on one end face (12-1), and wherein the second spring body (14) is arranged opposite to the spherical end face (12-1), adjoining the first spring body (12).

2. Additional spring (10) according to claim 1,
**characterised in that**
the spherically formed end face (12-1, 14-1) is designed in the form of a ball head.

3. Additional spring (10) according to claim 1,
**characterised in that**
the bump stop (16) is arranged in a cavity formed in the first and/or second spring body (12, 14).

4. Additional spring (10) according to any of claims 1,
**characterised in that**
a piezoelectric pressure sensor (28) is integrated into the bump stop (16).

5. Additional spring (10) according to any of the preceding claims,
**characterised in that**
the bump stop (16) is formed from polyamide.

6. Additional spring (10) according to any of the preceding claims,
**characterised in that**
the first and/or second spring body (12, 14) are formed from an elastomeric material.

7. Additional spring according to claim 6,
**characterised in that**
the first and/or second spring body (12, 14) are formed from polyurethane.

8. Damper bearing (20) for a shock absorber of a motor vehicle, having an additional spring (10) according to any of claims 1 to 7, comprising a flange region (22) for fastening on a vehicle body and a cylindrical mounting frame (24) in which the first spring body (12) of the additional spring (10) is held in certain regions, **characterised in that**
the mounting frame (24) has a spherically shaped bottom face (24-1) formed so as to correspond to the end face (12-1) of the first spring body (12).

9. Damper bearing (20) according to claim 8,
**characterised in that**
an elastomeric bearing element (26) is arranged in the flange region (22).

10. Damper bearing (20) according to claim 9,
**characterised in that**
the elastomeric bearing element (26) comprises a piezoelectric pressure sensor (28').

11. Damper bearing (20) according to any of claims 8 to 10,
**characterised in that**
the bottom face (24-1) of the mounting frame (24) is designed in the form of a ball socket.

## Revendications

1. Ressort supplémentaire (10) pour un pare-chocs d'un véhicule automobile, comprenant un premier corps de ressort (12) et un second corps de ressort (14) avec une rigidité de ressort différente par rapport au premier corps de ressort (12), dans lequel les corps de ressort (12, 14) présentent respectivement un alésage central (18) pour le passage d'une tige de piston (32) du pare-chocs (30), dans lequel un tampon de butée (16) est agencé entre le premier et second corps de ressort (12, 14), lequel présente une rigidité de ressort plus élevée par rapport aux deux corps de ressort (12, 16) et qui présente un alésage central (18) pour le passage d'une tige de piston (32) du pare-chocs (30),
dans lequel le second corps de ressort (14) est réalisé de manière sphérique au niveau de son côté avant (14-1) éloigné du premier corps de ressort (12),
**caractérisé en ce que** le premier corps de ressort (12) est réalisé de manière sphérique au niveau d'un côté avant (12-1), et dans lequel le second corps de ressort (14) est agencé à l'opposé du côté avant (12-1) sphérique, de manière contiguë au premier corps de ressort (12).

2. Ressort supplémentaire (10) selon la revendication 1,
**caractérisé en ce que**
le côté avant (12-1, 14-1) réalisé de manière sphérique est réalisé sous la forme d'une tête sphérique.

3. Ressort supplémentaire (10) selon la revendication 1,
**caractérisé en ce que**
le tampon de butée (16) est agencé dans un espace creux réalisé dans le premier et/ou second corps de ressort (12, 14).

4. Ressort supplémentaire (10) selon l'une quelconque des revendications 1,
**caractérisé en ce que**
un capteur de pression (28) piézoélectrique est intégré dans le tampon de butée (16).

5. Ressort supplémentaire (10) selon l'une quelconque des revendications précédentes,
**caractérisé en ce que**
le tampon de butée (16) est réalisé en polyamide.

6. Ressort supplémentaire selon l'une quelconque des revendications précédentes, **caractérisé en ce que**
le premier et/ou second corps de ressort (12, 14) sont réalisés en un matériau élastomère.

7. Ressort supplémentaire selon la revendication 6,
**caractérisé en ce que**
le premier et/ou second corps de ressort (12, 14) sont réalisés en polyuréthane.

8. Palier amortisseur (20) pour un pare-chocs d'un véhicule automobile, avec un ressort supplémentaire (10) selon l'une quelconque des revendications 1 à 7, comprenant une zone de bride (22) pour la fixation à une carrosserie de véhicule ainsi qu'un espace de logement (24) cylindrique, dans lequel à l'état monté le premier corps de ressort (12) des ressorts supplémentaires (10) est maintenu par endroits,
**caractérisé en ce que**
l'espace de logement (24) présente une surface de fond (24-1) formée de manière sphérique, réalisée de manière à correspondre au côté avant (12-1) du premier corps de ressort (12).

9. Palier amortisseur (20) selon la revendication 8,
**caractérisé en ce que**
un élément d'appui (26) élastomère est agencé dans la zone de bride (22).

10. Palier amortisseur (20) selon la revendication 9,
**caractérisé en ce que**
l'élément d'appui (26) élastomère comporte un capteur de pression (28') piézoélectrique.

11. Palier amortisseur (20) selon l'une quelconque des revendications 8 à 10,
**caractérisé en ce que**
la surface de fond (24-1) de l'espace de logement (24) est réalisée sous la forme d'un coussinet sphérique.
